# EUROPEAN PATENT APPLICATION

(11) **EP 0 581 265 A2**
(43) Date of publication of application: **02.02.1994**
(21) Application number: 93112061.2
(22) Date of filing: 28.07.1993
(51) Int. Cl.: G11B 5/39, G11B 5/48, G11B 5/105

(54) **Composite magnetic head**

(30) Priority: 29.07.1992 JP 202123/92
(71) Applicant: SHARP KABUSHIKI KAISHA, Osaka-shi Osaka-fu (JP)
(72) Inventor: Muramatsu, Tetsurou, Nara-shi, Nara-ken (JP); Kira, Tohru, Tenri-shi, Nara-ken (JP); Ishikawa, Toshio, Nara-shi, Nara-ken (JP)
(74) Representative: TER MEER - MÜLLER - STEINMEISTER & PARTNER

(57) **Abstract**

The head has a bulk head (11) for recording/reproducing an analog signal and a thin film magnetic head (4,5) for recording/reproducing a digital signal arranged adjacent to each other in a traveling width of a magnetic tape to be integrated. Because of this structure, it is possible to approximately double the number of thin film magnetic heads taken per wafer, whereby productivity is improved. Since bulk head (11) is used for recording/reproducing an analog signal, it is possible to reduce a manufacturing cost. It is also possible to avoid a problem of generation of a noise peculiar to the case where an analog signal is recorded/reproduced by the thin film magnetic head.

## Description

### BACKGROUND OF THE INVENTION

### Field of the Invention

The present invention relates to composite magnetic heads, and more particularly, to a composite magnetic head including a magnetic head which can reproduce or record/reproduce an analog signal and a magnetic head which can reproduce or record/reproduce a digital signal, used in a magnetic recording apparatus such as a DAT (Digital Audio Taperecorder), a DCC (Digital Compact Cassette), and a data memory device.

### Description of the Background Art

With magnetic recording made high in density, many thin film magnetic heads having a magnetic head formed on a substrate have conventionally been used. In particular, in order to implement by a fixed type head a magnetic recording system, such as the DAT and the like, which requires recording/reproducing of a large amount of information per unit time, a multichannel head for processing the information by dividing the same into a plurality of channels is needed. When such a multichannel head is used, crosstalk between adjacent tracks must be eliminated. In order to facilitate high integration of a head, it is preferred to use a semiconductor photolithography technology. From such a standpoint, it is difficult to apply a so-called conventional bulk head in which a wire is wound around a magnetic material bulk material core because of its large size. Therefore, it is the mainstream to use a thin film magnetic head to which a thin film magnetic material is applied.

As for recording/reproducing of an analog signal, a magnetic recording/reproducing system using a compact cassette is the mainstream. In this case, at most four magnetic heads may be disposed within a width of a recording medium (magnetic tape) of 3.8mm. Therefore, since a cost of the system can be more easily reduced by using the conventional bulk head than by applying the thin film magnetic head, the bulk head is currently used in the recording/reproducing system of an analog signal.

Since the DCC was proposed recently by Philips Corporation, a magnetic head having an electromagnetic transformation function which can carry out both digital signal processing and analog signal processing by using a compact cassette has rapidly been developed. As such a magnetic head, it is necessary to use a thin film magnetic head because of the above-described reasons when the digital signal processing is mainly taken into consideration. Therefore, the mainstream is using a head having a head for digital signal processing and a head for analog signal processing formed of a thin film material on the same substrate, in order to process an analog signal by the thin film magnetic head.

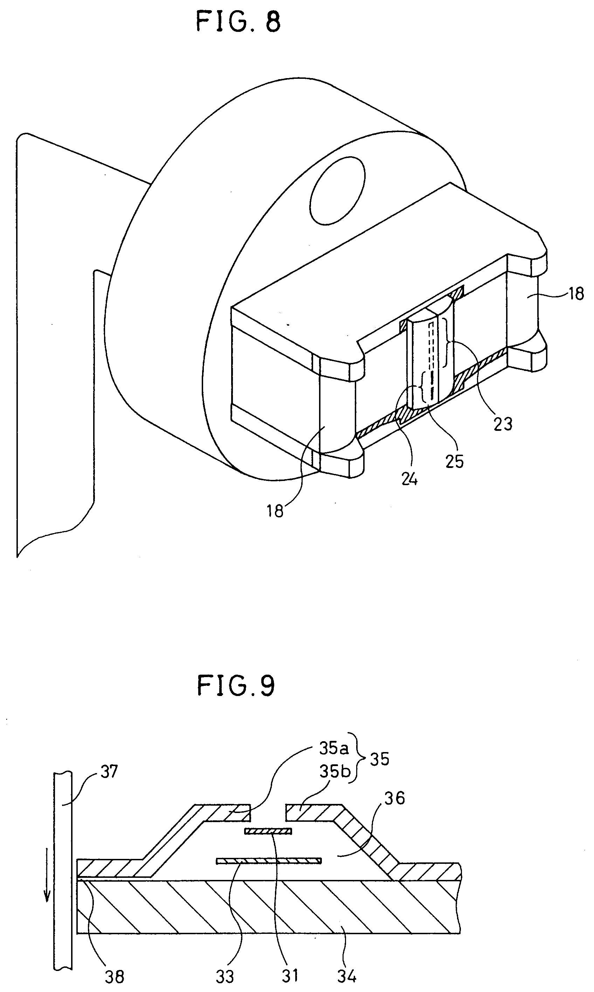

Such a conventional combined magnetic head has a structure as shown in, for example, Fig. 8. The composite magnetic head shown in Fig. 8 is provided with a head chip 25 between a pair of tape guides 18, 18 of a case 17 drawn to an external circuit by a flexible print substrate 6. Head chip 25 is provided with a digital signal head gathering portion 23 of a thin film magnetic head group recording/reproducing a digital signal and a thin film magnetic head 24 for an analog signal recording/reproducing an analog signal formed in parallel so as to be lined up in the direction of width of a recording medium.

However, the above-described composite magnetic head has the following problems.

In the composite magnetic head shown in Fig. 8, digital signal head gathering portion 23 has nine cores disposed within a width approximately half that of the recording medium, while thin film magnetic head 24 for an analog signal has only two cores disposed within the same width. More specifically, since the thin film magnetic head for an analog signal occupies more space than required, the yield of magnetic head chips per wafer is decreased. Therefore, the greatest characteristic of the thin film magnetic head that highly integrated magnetic heads can be mass-produced cannot be taken full advantage of.

As the thin film magnetic head reproducing a signal, a yoke type magnetoresistance effect type head (hereinafter referred to as a "YMR head") as shown in Fig. 9 is the mainstream. Referring to Fig. 9, the YMR type head has a lower side yoke 34 forming a magnetic path, and an upper side yoke 35 divided into front and back portions. Between upper side yoke 35 and lower side yoke 34, disposed are a magnetoresistive effect element (hereinafter referred to as an "MR element") 31 and a bias electrode 33 with an insulating layer 36 interposed therebetween. Magnetic flux generated from a magnetic recording medium 37 is introduced into a magnetic circuit constituted of upper side yoke 35 and lower side yoke 34 in a gap portion 38 between upper side yoke 35 and lower side yoke 34. More specifically, after reaching a cutting portion of an upper side front yoke 35a, the magnetic flux passes through MR element 31 to enter upper side yoke 35 from a cutting portion of an upper side back yoke 35b. Then, the magnetic flux returns to magnetic recording medium 37 through lower side yoke 34. Lower side yoke 34, also serving as a substrate of the thin film magnetic head, is formed of a soft magnetic material such as ferrite. Such a thin film magnetic head has the following advantages over the conventional bulk head. The conventional bulk head is based on the principle that a time change of the flux led by a yoke corresponding to a signal is taken out as a voltage induced by a coil. On the other hand, the yoke type thin film magnetic head can detect a change of the flux led by the yoke directly as a resistance change of MR element 31. Therefore, a phenomenon will not occur that, as the relative speed of the tape and the head decreases, the output of the signal reproduced by the head is decreased, as seen in the conventional bulk head. As a result, at the time of traveling of the recording medium at a low speed, it is possible to obtain a sufficient reproduction sensitivity.

However, when the yoke type magnetoresistive effect type head is used as a reproducing head for an analog signal, there exist the following problems. When a musical tone, for example, is recorded/reproduced with an analog signal, the height and magnitude of sound are directly converted from an electric signal to a magnetic signal. Therefore, when such a signal is reproduced by the yoke type thin film magnetic head, there is an unusual case where even a noise, which would not cause any problems in reproduction of a digital signal which requires only distinction between 0 and 1, gives a sense of incongruity in hearing to a listener due to a high sensitivity.

### SUMMARY OF THE INVENTION

One object of the present invention is to provide a magnetic head having a function of processing both a digital signal and an analog signal by one head, by selecting a thin film multichannel head for reproducing or recording/reproducing a digital signal and a conventional bulk head for reproducing or recording/reproducing an analog signal depending on their functions and integrating the same.

The composite magnetic head according to the present invention which accomplishes the above object includes a head chip for an analog signal including a magnetic head reproducing or recording/reproducing an analog signal in slidable contact with a traveling magnetic recording medium, and a head chip for digital signal including a magnetic head reproducing or recording/reproducing a digital signal. These analog signal head chip and digital signal head chip are arranged adjacent to each other within a traveling width of the magnetic recording medium to be integrated.

In the above-described structure, two kinds of head chips individually formed by different processes are combined into an integrated magnetic head. It is possible to use one head chip as a head chip for an analog signal, and the other head chip as a head chip for a digital signal head chip.

In a more specific structure of the present invention which accomplishes the above object, the magnetic head included in the analog signal head chip includes a magnetic flux induction core of a soft magnetic bulk material with high permeability and a coil wound around the magnetic flux induction core. The magnetic head included in the digital signal head chip includes a reproducing head having a magnetic flux induction core of a soft magnetic thin film material with high permeability formed on the main surface of the substrate and a magnetoresistive effect element.

According to the structure, by using a so-called bulk type head as a head for processing an analog signal, it is possible to make the size of the head chip approximately half as compared to the case of a head of a thin film material. Therefore, it is possible to make approximately two times the number of analog signal head chips taken per one wafer. In addition, since the manufacturing cost of the bulk head is substantially lower than that of the thin film head, it is possible to reduce the total cost of the magnetic head. Moreover, by using a bulk head for analog signal processing, the problem does not occur that a noise at the time of reproduction of a musical tone tape causes a sense of incongruity in hearing, which is peculiar to the case where the thin film head is used for processing an analog signal.

By constituting a multichannel type head to which a thin film forming technology is applied by using the thin film magnetic head as a digital signal magnetic head, it is possible to process an extremely large amount of information per unit time. It is also possible to take advantage of characteristics which the thin film magnetic head originally has, such as facilitation of high integration, and a high productivity by batch process.

The magnetic head included in the digital signal head chip has a recording head formed on the same substrate as that of the reproducing head, whereby it is possible to carry out not only reproduction but also recording of a digital signal.

The analog signal head chip and the digital signal head chip may be arranged so as to line up in a traveling direction of the magnetic recording medium, or may be arranged so as to line up in a direction orthogonal to the traveling direction of the magnetic recording medium. By being arranged so as to line up in the traveling direction of the magnetic recording medium, these chips can be applied to a magnetic recording/reproducing apparatus of a system which can carry out recording/reproducing of both a digital signal and an analog signal in the entire width of the magnetic recording medium. By being arranged so as to line up in the direction orthogonal to the traveling direction of the magnetic recording medium, the analog signal head chip and the digital signal head chip can be applied to a magnetic recording/reproducing apparatus of a system in which the width of the magnetic recording medium is divided into a track region for recording/reproducing an analog signal and a track region for recording/reproducing a digital signal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1A is a perspective view showing a composite magnetic head of a first embodiment of the present invention, and Fig. 1B is an enlarged cross sectional view of a head for recording/reproducing a digital signal of the composite magnetic head.

Fig. 2 is a schematic diagram showing a method of adjusting a mounting position of a magnetic head with respect to a case.

Fig. 3 is a schematic diagram showing a method of drawing a lead from the composite magnetic head.

Fig. 4 is a perspective view showing a composite magnetic head of a second embodiment of the present invention.

Fig. 5 is perspective view showing a composite magnetic head of a third embodiment of the present invention.

Fig. 6 is a cross sectional view of a core of a bulk head used in the composite magnetic head of the third embodiment shown in Fig. 5.

Fig. 7 is a perspective view of a composite magnetic head of a fourth embodiment of the present invention.

Fig. 8 is a perspective view showing a conventional composite magnetic head having a recording/reproducing function of both an analog signal and a digital signal.

Fig. 9 is a cross sectional view showing an example of a yoke type magnetoresistive effective type thin film magnetic head.

### DESCRIPTION OF THE PREFERRED EMBODIMENTS

Description will be given on embodiments of the composite magnetic head based on the present invention hereinafter.

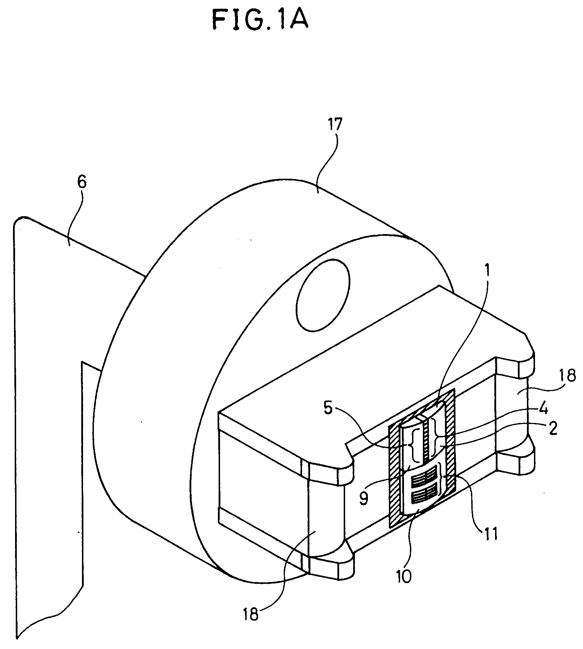

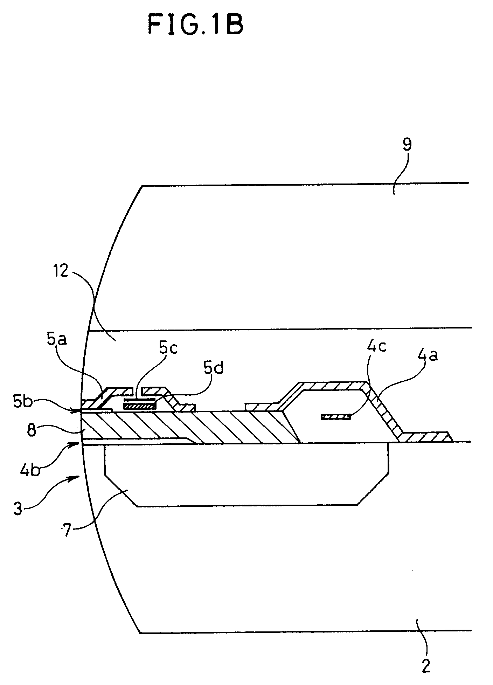

The composite magnetic head of the first embodiment based on the present invention includes a thin film magnetic head chip 1 for a digital signal, and a head chip 10 for an analog signal including a conventional bulk head for an analog signal, as shown in Fig. 1A. Thin film magnetic head chip 1 and head chip 10 are arranged so as to line up in a direction orthogonal to the traveling direction of a magnetic recording medium (not shown) on a magnetic recording medium traveling portion 18 to be integrated. Referring to Fig. 1A, thin film magnetic head 1 for processing a digital signal has a plurality of digital signal recording heads 4 and reproducing heads 5 of the same number formed on a substrate 2 of Mn-Zn ferrite or Ni-Zn ferrite. In thin film magnetic head chip 1, as shown in Fig. 1B, a yoke 4a of recording head 4 and a yoke 5a of reproducing head 5 are formed on substrate 2 with a mold glass 7 and a shared core 8 interposed therebetween. Shared core 8 constitutes a recording magnetic circuit together with substrate 2 of a magnetic substance and yoke 4a. A recording gap 4b is formed at magnetic recording medium sliding surface 3 between common core 8 and substrate 2. Common core 8 constitutes a reproducing magnetic circuit together with a yoke 5a. A reproducing magnetic gap 5b is formed between common core 8 and yoke 5a. A recording coil 4c is provided inside yoke 4a, and an MR element 5c and a bias electrode 5d are provided inside yoke 5a.

Yoke 4a and yoke 5a are covered with a planarized non-magnetic protecting film 12. A non-magnetic protecting plate 9 is affixed to the upper surface of non-magnetic protecting film 12. As described above, the thin film magnetic head is interposed between substrate 2 of a magnetic substance and non-magnetic protecting plate 9.

As for a core film of recording head 4 and reproducing head 5, an Fe-Al-Si film and an Ni-Fe film are used, respectively. As for the non-magnetic protecting film, an SiO₂ film is used, and as for protecting plate 9, a CaTiO₃ system ceramic substrate is used. These materials are only examples of combination. As for a magnetic material, an amorphous alloy such as Co-Nb-Zr and metal alloy such as Fe-C, Fe-N system materials can be used other than the above. It is also possible to use a hard inorganic film such as Al₂O₃, SiC, SiN as for a protecting film, and to use non-magnetic ferrite, MnO-NiO system ceramic, a crystallized glass material and the like as a protecting plate material. A lead is drawn to an external circuit by flexible print substrate 6 by applying a TAB (Tape Automated Bonding) method.

Head chip 10 for processing an analog signal includes a conventional bulk head. The bulk head is formed by winding a coil around a core having thin strips 11 of permalloy in stack (not shown). The bulk head is resin molded at a predetermined position in a shield case (not shown). Other soft magnetic materials can be used as a material of the core. Magnetic recording medium sliding surfaces of head chips 1, 10 are processed in advance to have the same radius of coverture by cylindrical grinding and tape lapping. The radius of coverture is set to, for example, 5.0±0.1mm.

In joining two head chips 1 and 10, head chips 1 and 10 are pressed against a reference surface 13 using optical flat arranged so as to oppose to a magnetic tape sliding surfaces of head chips 1 and 10. In the state, a dark and light stripes due to the light interference effect between reference surface 13 and the magnetic tape sliding surfaces of head chips 1, 10 and the relative position are monitored by a microscope. A parallelism (more specifically, parallelism between the magnetic surface of a tape and a tape sliding surface of the head) and projection, an azimuth with respect to a tape edge and a track position of the magnetic head included in two head chips 1, 10 are thus adjusted. Then, by using an instantaneous adhesive agent, a resin hardened by ultraviolet rays or the like, head chips 1, 10 are jointly bonded.

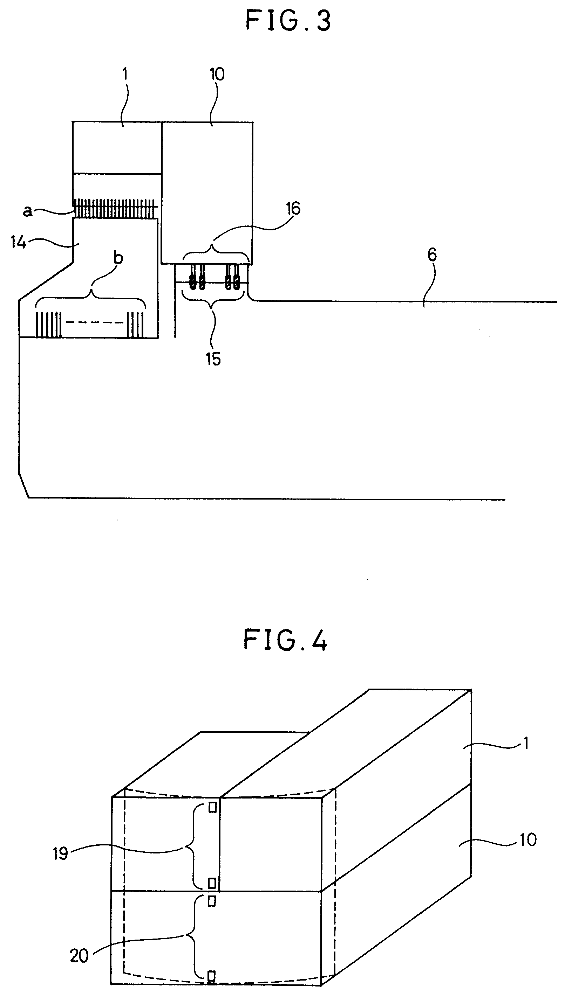

A method of drawing the lead will be explained with reference to Fig. 3. Inner leads 14a of a flexible print substrate 14 are integrally connected to a pad (not shown) provided at thin film magnetic head chip 1 by the TAB method. Flexible print substrate 6 is connected to outer leads 14b of flexible print substrate 14 by soldering. A lead connecting terminal 16 of head chip 10 is connected to a terminal 15 provided at flexible print substrate 6. As described above, drawing of leads to the external circuit from two head chips 1, 10 is integrally carried out by two flexible print substrates 6, 14.

After assembled into a composite magnetic head in a manner shown in Fig. 1A, the magnetic head integrated by such a process has the tape sliding surfaces of head chips 1, 10 and a tape sliding surface of tape guides 18a, 18b of case 17 polished by using a lapping tape, whereby the magnetic head of this embodiment is completed. The purpose of carrying out polishing with a lapping tape is to remove a subtle step on a joining surface between head chip 1 and head chip 10, and to finish the surface of tape guides 18a, 18b in a desired roughness.

Case 17 is formed of a reinforced plastic having wear-resistance including carbon or fluorine. Case 17 is integrally formed by integral injection molding.

Description will now be given on a composite magnetic head of the second embodiment of the present invention with reference to Fig. 4. In the above-described first embodiment, head chips 1, 10 are integrated after finishing in advance the tape sliding surface of each of thin film magnetic head chip 1 for a digital signal and head chip 10 for an analog signal by cylindrical grinding and tape lapping. On the other hand, in this embodiment, head chips 1, 10 are integrated in the state before applying a finishing process to the tape sliding surfaces.

Fig. 4 shows the state where head chips 1, 10 having a tape sliding surface to which the finishing process is not applied are integrated. Adjustment of the relative position in integrating two head chips 1, 10 is carried out by using position markers 19, 20 formed on a surface serving as tape sliding surfaces of head chips 1, 10. After adjusting the relative position by position markers 19, 20, head chips 1, 10 are adhered by an instantaneous adhesive agent, a resin hardened by ultraviolet rays or the like. After that, cylindrical grinding and tape lapping are applied integrally to the tape sliding surfaces of head chips 1, 10.

Prior to the step of integrating two head chips 1, 10, flexible print substrates 6, 14 (not shown in Fig. 4) are already connected to head chip 1.

In this embodiment, compared to the first embodiment, since the tape sliding surfaces of two head chips 1, 10 are integrally processed, it is possible to eliminate adjustment of projection and parallelism in adjusting positions of head chips 1, 10. Moreover, since it is possible to substantially simplify tape abrasion after head casing, productivity can be improved.

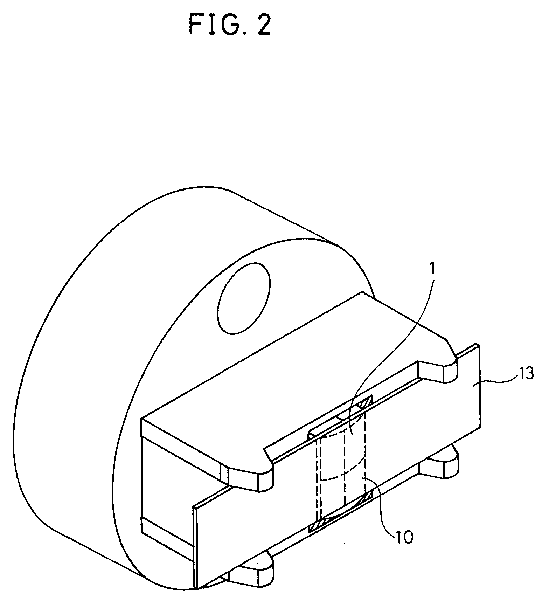

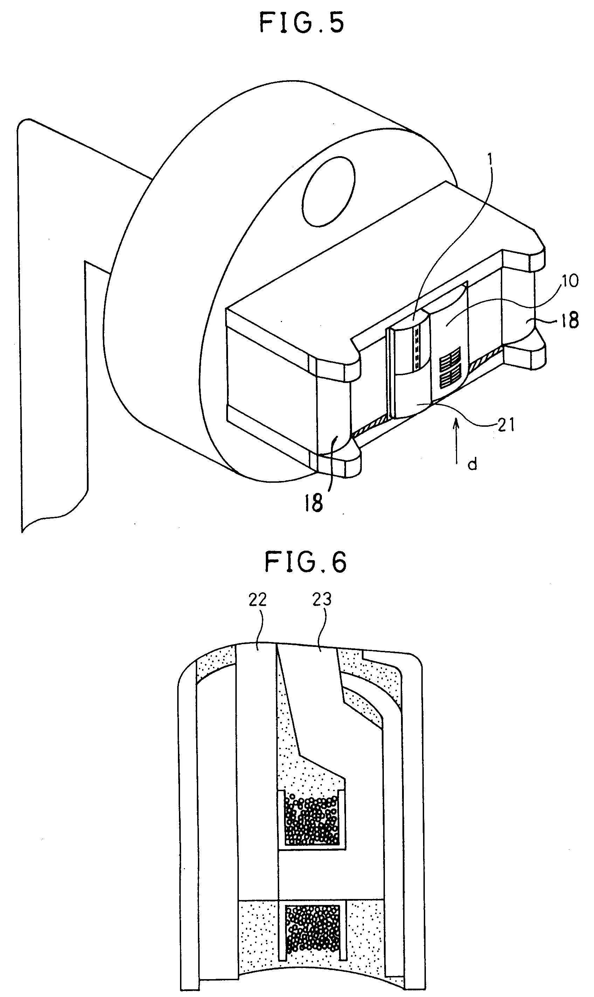

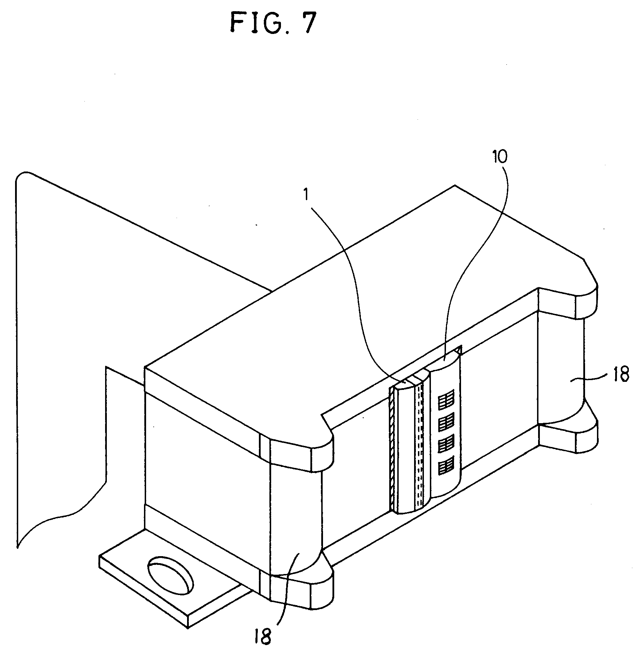

Referring to Figs. 5 and 6, a composite magnetic head of the third embodiment of the present invention will now be described. Also in this embodiment, similar to the case of the first embodiment, thin film magnetic head chip 1 for a digital signal, conventional bulk head chip 10 for an analog signal and a spacer 21 are integrated by a position adjusting method shown in Fig. 2.

This embodiment is different from the first embodiment in the following points. As shown in Fig. 6, as a bulk head included in head chip 10 for an analog signal, a core of a shape in combination of an I type core 22 and a C type core 23 is used. It is for improving a contact state with the magnetic tape by reducing a space between a magnetic gap of a magnetic head included in head chip 1 for digital signal and a magnetic gap of a magnetic head included in head chip 10 for an analog signal.

Fig. 6 is a cross sectional view of a portion where a bulk head of head chip 10 is formed, seen from the direction of an arrow d shown in Fig. 5.

In this embodiment, it is possible to reduce the size of head chip 1 for a digital signal by using spacer 21. Therefore, the problem is avoided that the number of head chips 1 formed of a thin film taken from one wafer, that is, the yield per wafer, is decreased. As for a material of spacer 21, a CaTiO₃ system ceramic material and other ceramic materials, Mn-Zn ferrite, Ni-Zn ferrite, crystallized glass, soda glass, or the like can be used.

Description will now be given on a composite magnetic head of the fourth embodiment of the present invention with reference to Fig. 7. The composite magnetic head of this embodiment shown in Fig. 7 is applied to a so-called auto reverse system which is used in Walkman and part of cassette tape players used in automobiles.

The composite magnetic head according to the first to the third embodiments includes a rotary magnetic head which implements recording/reproducing of the entire width of the magnetic tape by rotating the head by 180°C for a forward and reverse run of the magnetic tape. On the other hand, the composite magnetic head of this embodiment includes a fixed type magnetic head which implements recording/reproducing of the entire tape width for a forward and reverse run of the magnetic tape with the head being fixed and without rotating the same.

In the composite magnetic head of this embodiment, referring to Fig. 7, in order to make possible recording/reproducing for a forward and reverse run of the magnetic tape with the magnetic head being fixed, respective cores of thin film magnetic head chip 1 for a digital signal and conventional bulk head chip 10 for an analog signal are disposed over the width substantially corresponding to the entire width of the magnetic tape. In assembling the composite magnetic head of this embodiment, a method shown in Fig. 2 in the above-described first embodiment is applied.

In the magnetic head for a fixed type auto reverse system as this embodiment, it is possible to reduce a manufacturing cost by using the conventional bulk head for processing an analog signal, compared to the case where both heads for processing digital signals and analog signals are constituted by the thin film magnetic heads.

Following is a summary of effects of each of the above-described embodiments.
(1) It is possible to substantially improve productivity since the number of thin film magnetic heads taken per wafer is almost doubled by using a thin film magnetic head only as a magnetic head included in head chip 1 for a digital signal, and applying a conventional bulk head as a magnetic head included in head chip 10 for an analog signal.
(2) It is possible to substantially reduce a cost by using a conventional bulk head as a magnetic head for an analog signal, compared to the case where a thin film magnetic head is used.
(3) It is possible to improve reliability as a magnetic head in whole and the yield, because generation of a noise which brings a sense of incongruity in hearing is avoided which may occur in the case where an analog signal is reproduced by a thin film magnetic head, by using a conventional bulk head for reproducing or both recording and reproducing an analog signal.
(4) It is possible to apply a thin film magnetic head to commercially available appliances and mass-produce the thin film magnetic head easily because of the above-described effects.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A composite magnetic head, comprising:
a head chip (10) for an analog signal including a magnetic head carrying out reproducing or both recording and reproducing of an analog signal in slidable contact with a traveling magnetic recording medium; and
a head chip (1) for a digital signal including a magnetic head carrying out reproducing or both recording and reproducing of a digital signal in slidable contact with the traveling magnetic recording medium, wherein
said head chip (10) for an analog signal and said head chip (1) for a digital signal being arranged adjacent to each other in a traveling width of the magnetic recording medium to be integrated.

2. The composite magnetic head according to claim 1, wherein
said magnetic head included in said head chip (10) for an analog signal includes a magnetic flux induction core of a bulk material with high permeability and a coil wound around said magnetic flux induction core.

3. The composite magnetic head as recited in claim 1, wherein
a magnetic head included in said head chip (1) for a digital signal includes a reproducing head including a magnetic flux induction core of a soft magnetic thin film material with high permeability and a magnetoresistive effect element formed on a main surface of a substrate.

4. The composite magnetic head as recited in claim 3, wherein
said magnetic head included in said head chip (1) for a digital signal further includes a recording head including a thin film core of a soft magnetic thin film material with high permeability formed on the main surface of the same substrate as that on which said reproducing head is formed.

5. The composite magnetic head as recited in claim 1, wherein
said head chip (10) for an analog signal and said head chip (1) for a digital signal are arranged in series in a traveling direction of the magnetic recording medium.

6. The composite magnetic head as recited in claim 1, wherein
said head chip (10) for an analog signal and said head chip (1) for a digital signal are arranged in parallel in a direction orthogonal to the traveling direction of the magnetic recording medium.

7. The composite magnetic head as recited in claim 1, wherein
said magnetic head included in said head chip (10) for an analog signal has a magnetic flux induction core of a soft magnetic bulk material with high permeability and a coil wounded around said magnetic flux induction core, and
said magnetic head included in said head chip (1) for a digital signal includes a reproducing head having a magnetic flux induction coil of a soft magnetic thin film material with high permeability and a magnetoresistive effect element formed on a main surface of a substrate.

8. The composite magnetic head as recited in claim 7, wherein
said magnetic head included in said head chip (1) for a digital signal further includes a recording head having a thin film core of a soft magnetic thin film material with high permeability formed on the main surface of the same substrate as that on which said reproducing head is formed.

9. The composite magnetic head as recited in claim 7, wherein
said head chip (10) for an analog signal and said head chip (1) for a digital signal are arranged in series in a traveling direction of the magnetic recording medium.

10. The composite magnetic head as recited in claim 9, wherein
said head chip (1) for a digital signal has a width approximately half that of said head chip (10) for an analog signal, and a spacer (21) is joined at a side end portion of said head chip (1) for a digital signal so that the width of said head chip (1) for a digital signal plus said spacer (21) is the same as that of said head chip (10) for an analog signal.

11. The composite magnetic head as recited in claim 9, wherein
magnetic heads are arranged over approximately the entire width of respective said head chip (1) for a digital signal and said head chip (10) for an analog signal.

12. The composite magnetic head as recited in claim 7, wherein
said head chip (10) for an analog signal and said head chip (1) for a digital signal are arranged in parallel in a direction orthogonal to the traveling direction of the magnetic recording medium.
